# EUROPÄISCHE PATENTANMELDUNG

(11) **EP 1 607 672 A1**
(43) Veröffentlichungstag der Anmeldung: **21.12.2005**
(21) Anmeldenummer: 04014213.5
(22) Anmeldetag: 17.06.2004
(51) Int. Cl.: F16L 37/14

(54) **Drehverbindung für Fluide führende Leitungen und Schläuche**

(71) Anmelder: ATEC Autotechnik GmbH, 67435 Neustadt/Weinstrasse (DE)
(72) Erfinder: Lambert, Günter, 67435 Neustadt (DE)
(74) Vertreter: Patentanwälte Möll und Bitterich

(57) **Zusammenfassung**

Gegenstand der Erfindung ist eine Drehverbindung für Fluide führende Leitungen und Schläuche. Sie umfasst einen Außenring (1), einen Innenring (2), drehbar passend in den Außenring (1), eine Sicherungsnut (3), jeweils zur Hälfte im Außenring (1) und im Innenring (2), eine Öffnung (4) im Außenring (1), die in der Sicherungsnut (3) endet, und einen Sicherungsdraht (5) in der Sicherungsnut (3). Der Innenring (2) besitzt eine Nase (6), die die Sicherungsnut (3) des Innenrings (2) verschließt. Nach Einstecken eines flachen Werkzeugs (7) in die Öffnung (4) kann durch Rückwärtsdrehen des Innenrings (2) das Ende (5') des Sicherungsdrahtes (5) aus der Öffnung (4) herausgedrückt werden.

## Beschreibung

Die Erfindung betrifft Drehverbindungen für Fluide führende Leitungen und Schläuche gemäß dem Oberbegriff des Anspruchs 1.

Drehverbindungen, die es erlauben, dass gekuppelte Abschnitte von Leitungen und Schläuchen sich um 360 und mehr Grad gegeneinander verdrehen können, sind bekannt. Sie bestehen aus einem Außenring mit einer zylindrischen Innenöffnung, einem Innenring, der drehbar in die Öffnung des Außenrings passt, einer Sicherungsnut, die sich jeweils zur Hälfte im Außenring und im Innenring befindet, einer Öffnung im Außenring, die in der Sicherungsnut endet, und einem Sicherungsdraht, der durch die Öffnung im Außenring in die Sicherungsnut eingeschoben wird. Dieser Sicherungsdraht verhindert das Trennen von Innenring und Außenring, behindert jedoch die Drehung der beiden Ringe gegeneinander nicht.

Ein Nachteil dieser Drehverbindung ist, dass sie nicht lösbar ist, weil es keine Möglichkeit gibt, den Sicherungsdraht aus der Öffnung herauszuziehen. Es wurde zwar schon versucht, den Sicherungsdraht so lang zu machen, dass sein Ende nicht im Inneren der Sicherungsnut verschwindet. Das herausstehende Ende war jedoch schon vielfach Anlass für Beschädigungen und Fehlfunktionen, so dass sich diese Lösung nicht durchsetzen konnte.

Der vorliegenden Erfindung liegt daher die Aufgabe zugrunde, eine Drehverbindung der eingangs genannten Art anzugeben, bei der der Sicherungsdraht komplett in der Sicherungsnut verschwindet, bei Bedarf jedoch wieder entfernt werden kann.

Diese Aufgabe wird gelöst durch eine Drehverbindung mit den Merkmalen des Anspruchs 1.

Dank der erfindungsgemäßen Konstruktion genügt es, ein flaches Werkzeug, beispielsweise einen Keil oder auch nur eine Schraubendreherklinge, durch die Öffnung in die Sicherungsnut einzuführen und anschließend den Innenring gegen den Außenring rückwärts, d. h. entgegen der Richtung, in der der Sicherungsdraht eingeführt wurde, zu verdrehen. Dadurch gleitet das Ende des Sicherungsdrahtes an dem flachen Werkzeug entlang aus der Öffnung heraus und kann dann mit einer Zange gefasst und herausgezogen werden.

Damit der Draht noch besser herausgleiten kann, empfiehlt es sich, sein Ende keilförmig anzuschrägen.

Anhand der Zeichnung soll die Erfindung in Form eines Ausführungsbeispiels näher erläutert werden. Es zeigen
- Fig. 1 bis 3: in drei aufeinanderfolgenden Stellungen das Einführen eines Sicherungsdrahtes in eine Sicherungsnut einer Drehverbindung und
- Fig. 4 und 5: in zwei aufeinanderfolgenden Positionen das Entfernen des Sicherungsdrahtes zum Lösen der Drehverbindung.

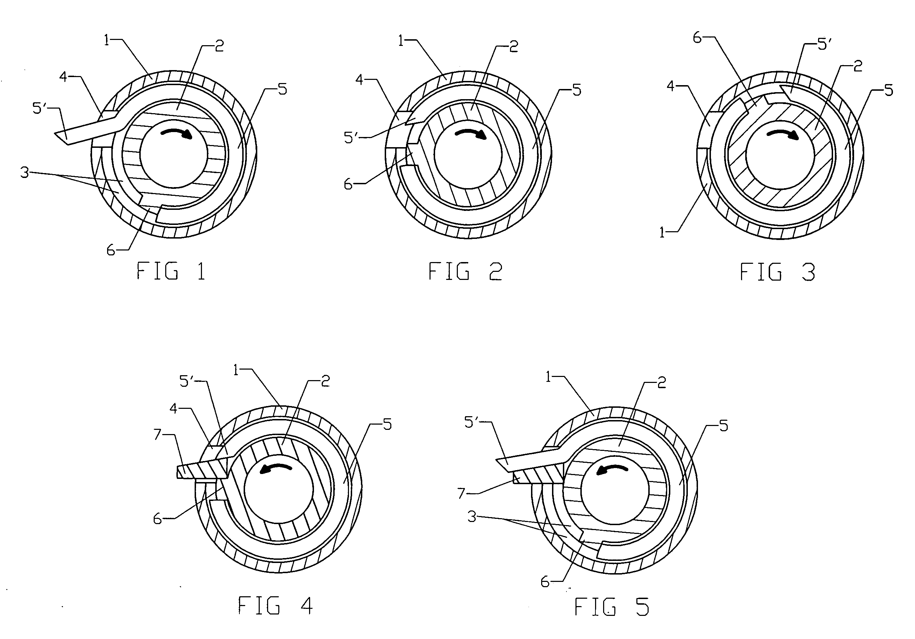

Die Fig. 1 bis 5 zeigen eine Drehverbindung für Fluide führende Leitungen und Schläuche, gebildet durch einen Außenring 1 und einen Innenring 2, der drehbar in den Außenring 1 eingepasst ist. Jeweils zur Hälfte im Außenring 1 und im Innenring 2 ist eine Sicherungsnut 3 vorgesehen. Innenring 2 und Außenring 1 sind im Bereich der Sicherungsnut 3 geschnitten dargestellt.

Die Fig. 1 bis 3 zeigen in drei Positionen das Einbringen eines Sicherungsdrahts 5 in die Sicherungsnut 3. Dazu befindet sich im Außenring 1 ein Schlitz 4, der in der Sicherungsnut 3 endet. Durch den Schlitz 4 wird der Sicherungsdraht 5 eingeschoben.

Fig. 1 zeigt, dass bei teilweise eingeschobenem Sicherungsdraht 5 dessen Ende 5' noch aus dem Schlitz 4 herausragt. In Fig. 2 wurde der Sicherungsdraht 5 komplett eingeschoben. Fig. 3 zeigt, dass Außenring 1 und Innenring 2 beliebig gegeneinander verdreht werden können.

Die Fig. 4 und 5 zeigen das wieder Herausziehen des Sicherungsdrahtes 5, um Außenring 1 und Innenring 2 wieder lösen zu können. Dazu wird durch den Schlitz 4 zunächst ein flaches Werkzeug 7, beispielsweise ein Keil oder eine Schraubendreherklinge, bis in die Sicherungsnut 3 eingeführt. Anschließend wird der Innenring 2 gegen den Außenring 1 rückwärts gedreht. Dadurch schiebt eine am Innenring 2 angebrachte Nase 6, die die Sicherungsnut 3 des Innenrings 2 versperrt, den Anfang des Sicherungsdrahtes 5 an dem Werkzeug 7 entlang durch den Schlitz 4 nach außen. Dies ist in Fig. 5 dargestellt. In dieser Position kann das Ende 5' des Sicherungsdrahtes 5 mit einer Zange ergriffen und ganz herausgezogen werden.

Wie die Fig. 3 und 4 erkennen lassen, ist das Ende 5' des Sicherungsdrahtes 5 keilförmig angeschrägt, wodurch der Sicherungsdraht 5 noch leichter am Werkzeug 7 entlang nach außen gleiten kann.

## Patentansprüche

1. Drehverbindung für Fluide führende Leitungen und Schläuche, wenigstens umfassend
- einen Außenring (1),
- einen Innenring (2), drehbar passend in den Außenring (1),
- eine Sicherungsnut (3), jeweils zur Hälfte im Außenring (1) und im Innenring (2),
- eine Öffnung (4) im Außenring (1), die in der Sicherungsnut (3) endet,
- und einen Sicherungsdraht (5) in der Sicherungsnut (3), **gekennzeichnet durch** das Merkmal:
- der Innenring (2) besitzt eine Nase (6), die die Sicherungsnut (3) des Innenrings (2) verschließt.

2. Drehverbindung nach Anspruch 1, **gekennzeichnet durch** das Merkmal:
- das Ende (5') des Sicherungsdrahtes (5) ist keilförmig angeschrägt.
